# DEMANDE DE BREVET EUROPEEN

(11) **EP 1 418 510 A1**
(43) Date de publication de la demande: **12.05.2004**
(21) Numéro de dépôt: 03103972.0
(22) Date de dépôt: 27.10.2003
(51) Int. Cl.: G06F 17/30, G06F 17/24

(54) **Procédé et système de gestion de données.**

(30) Priorité: 29.10.2002 FR 0213541
(71) Demandeur: Thales, 92200 Neuilly Sur Seine (FR)
(72) Inventeur: LETE, Ghislain, 94117 CX, ARCUEIL (FR)
(74) Mandataire: Lucas, Laurent Jacques

(57) **Abrégé**

En général, la gestion de données est réalisée par un système comportant une base de données. La mise en oeuvre de telles bases de données est lourde et implique des délais longs. En outre, ce sont des systèmes propriétaires. De tels systèmes sont mal adaptés à des applications évolutives et mobiles.

La présente invention propose un procédé de gestion de données ouvert plus léger, plus rapide à mettre en oeuvre comportant :
- Plusieurs étapes de récupération de données, un sous-ensemble de données étant récupéré à chaque étape de récupération,
- Une étape de conversion du sous-ensemble de données récupérées dans un langage d'interopérabilité sous la forme d'un fichier élémentaire, une étape de conversion étant effectuée après chaque étape de récupération ,
- Une étape d'édition d'un fichier global dans un langage d'interopérabilité à partir de plusieurs fichiers élémentaires, le fichier global étant destinée à un dispositif d'analyse capable de traiter tous les ensembles de données récupérées transmis dans le fichier global.

## Description

L'invention concerne un procédé et un système de gestion de données.
En général, la gestion de données est réalisée par un système comportant une base de données. La mise en oeuvre de telles bases de données est lourde et implique des délais relativement longs (quelques semaines voire mois). En outre, les systèmes utilisant des bases de données sont propriétaires. Ils engendrent donc pour leur utilisateur des coûts supplémentaires liés aux licences et une administration utilisateurs lourdes.

De tels systèmes de gestion de données sont donc mal adaptés à des applications évolutives. Par exemple, la gestion des données d'une mission sismologique implique la prise en compte des données de terrain, des matériels et du personnel à disposition pour la mission. Le terrain peut avoir évolué depuis la dernière mission, le matériels et le personnel à disposition sont rarement les mêmes : une nouvelle base de données comprenant les nouvelles données doit donc être mise en oeuvre avec les systèmes existants à chaque mission.

Or, lorsqu'une telle mission sismologique est envisagée, c'est que des signes avant-coureurs sont apparus et la mission doit être rapidement mise en place. La gestion des données à l'aide des systèmes actuels avec base de données ne répond donc pas aux exigences d'un tel type de mission, notamment en terme de rapidité de mise en oeuvre d'un système de gestion spécialisé.

De plus, les données collectées étant de différents types : terrain, matériels, personnel..., elles proviennent de sources différentes. La mise en oeuvre de la base de données implique donc une coopération de la part des diverses sources avec l'appui d'un spécialiste de la mise en oeuvre de base de données. Or, les diverses sources peuvent être localisées dans des pays différents au moment de la préparation de la mission. Certaines sources sont mobiles en raison du type de données quelles fournissent (par exemple, mesure sur le terrain des nouvelles lignes de niveaux...). Le système avec base de données et son dispositif d'entrée des données étant co-localisé et fixe, la coopération s'en trouvera donc compliquée.
La présente invention permet de palier ces inconvénients en proposant un procédé de gestion de données ouvert plus léger, plus rapide et moins coûteux à mettre en oeuvre.

L'invention a pour objet un procédé de gestion de données comportant :
- Plusieurs étapes de récupération de données, un sous-ensemble de données étant récupéré à chaque étape de récupération,
- Une étape de conversion du sous-ensemble de données récupérées dans un langage d'interopérabilité sous la forme d'un fichier élémentaire, une étape de conversion étant effectuée après chaque étape de récupération ,
- Une étape d'édition d'un fichier global dans un langage d'interopérabilité à partir de plusieurs fichiers élémentaires, le fichier global étant destiné à un système externe capable de traiter tous les ensembles de données récupérées transmis dans le fichier global.

Un autre objet de l'invention est un système de gestion de données caractérisé en ce qu'il comporte :
- Au moins une interface permettant la récupération de données,
- Au moins un convertisseur des données récupérées dans un langage d'interopérabilité sous la forme d'un fichier élémentaire, un convertisseur étant relié à chaque interface,
- Des moyens d'édition d'un fichier global dans un langage d'interopérabilité à partir de plusieurs fichiers élémentaires, les moyens d'édition étant reliés à chacun des convertisseurs de données au moins ponctuellement,
- Une sortie destinée à être reliée à un système externe auquel sera transmis le fichier global.

En outre, l'invention propose une chaîne de traitement de données comportant le système de gestion de données et un système externe comportant un dispositif d'analyse capable de traiter tous les ensembles de données récupérées transmis dans le fichier global.
Les caractéristiques et avantages de l'invention apparaîtront plus clairement à la lecture de la description, faite à titre d'exemple, et des figures s'y rapportant qui représentent :
- Figure 1, un schéma bloc d'un système de gestion données ouvert selon l'état de l'art,
- Figure 2, un schéma bloc d'un système de gestion données ouvert selon l'invention,
- Figure 3a, un exemple d'interface homme machine selon l'invention, et Figure 3b, un exemple d'interface machine machine invention,
- Figure 4, une illustration d'un exemple de formulaire affiché par l'interface et du produit du convertisseur selon l'invention,
- Figure 5, un schéma de déploiement du système de gestion des données selon l'invention,
- Figure 6, un schéma de décomposition des étapes amonts du procédé de gestion des données selon l'invention.

L'invention repose sur l'exploitation des composants de la e-technologie: navigateur Web sur réseau Intranet/Internet, serveur HTTP, servlets JAVA, formulaires HTML, parser XML. Elle n'intègre pas de système de gestion de base de données, permettant ainsi de ne pas en supporter les efforts et coûts induits.

L'architecture légère proposée par l'invention reste ouverte à l'intégration de documents XML produits par d'autres outils ou systèmes, permettant une polyvalence d'utilisation en production et édition XML. Elle est extensible à l'intégration d'une base de données pour une migration vers une architecture « 3-TIERS » classique.

Les informations XML produites sont susceptibles de représenter in extenso les données applicatives de tout ou partie d'un système.

XML, langage approuvé par le W3C , est une technologie favorisant l'interopérabilité et le partage d'informations. Cette technologie est particulièrement adaptée au e-business et aux environnements web, mais son influence est grandissante dans nombre de domaines.

Les systèmes en développement s'ouvrent en offrant une interface XML plutôt qu'une interface propriétaire dans son format leur permettant de communiquer sur la base d'un standard avec des systèmes externes existants ou futurs.

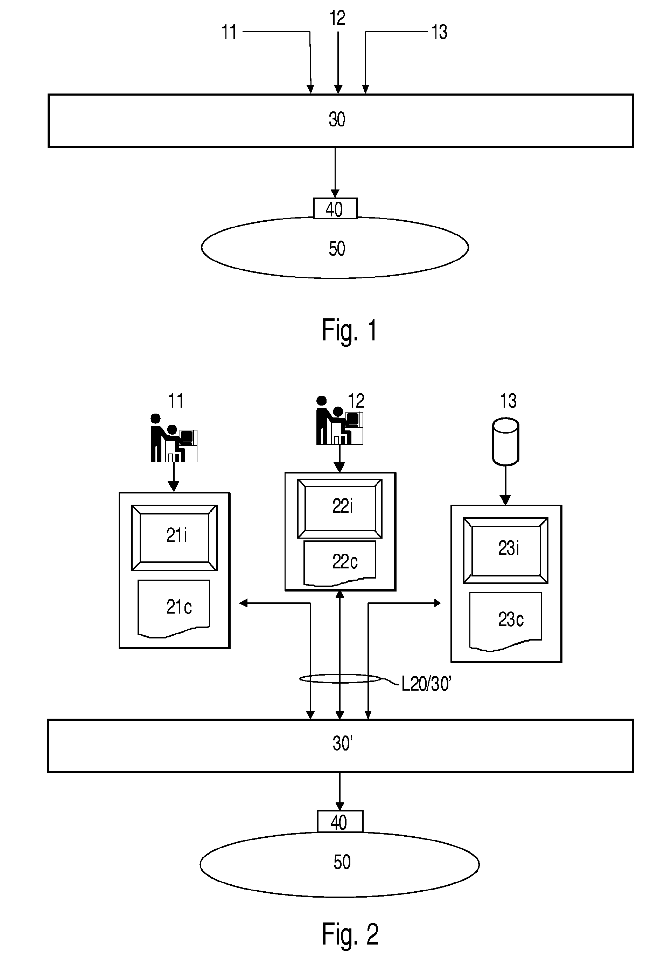

La figure 1 concerne un schéma bloc d'un système de gestion données ouvert selon l'état de l'art. Plusieurs sources 11, 12 et 13 collaborent en fournissant chacune un sous-ensemble des données au dispositif d'édition 30. Dans l'état de l'art, la fourniture des données à un système externe 50 est réalisé via une interface 40 qui est une interface XML.

Un exemple typique est la fourniture sous forme d'un document XML des données d'entrées ou des paramètres de programmation d'un système externe 50. Cette interface XML 40 est une alternative et/ou un complément au développement et à la mise en oeuvre d'une interface homme machine (IHM) intégré au système externe 50. La collecte des données d'entrée pour la production d'un document XML est un aspect périphérique mais néanmoins fondamental du système. Cette collecte peut être une tache coopérative nécessitant l'intervention de compétences métiers diverses et distribuées aux diverses sources 11, 12 et 13 comme le montre la Figure 1.

Au sein de systèmes intégrés, XML est une technologie de support et reste une abstraction pour l'utilisateur final. XML est également utilisé comme un format d'échange entre personnes, organisations et/ou systèmes. Dans ce cadre, un document XML est manipulé de la même façon que peut l'être un document Microsoft Word ou Excel.

Donc, la manipulation directe du XML est évidemment possible avec l'utilisation d'un éditeur de texte classique (type Notepad) ou d'un éditeur XML spécialisé (type XML Notepad). Cela reste toutefois une spécialité - basée sur l'exploitation du schéma ou de la DTD associée au document XML - menée isolément par chaque coopérant source d'un sous-ensemble des données d'entrée du système.

Une édition de données automatisée et ergonomique pour chaque coopérant se ramène à un nouveau système avec interface de présentation adaptée masquant la syntaxe XML et système de sauvegarde, en général une base de données. L'activité - périphérique en premier abord - induite par l'interface XML génère dans ces conditions des développements lourds et coûteux.

Le périmètre de l'invention vise à définir un procédé simple de gestion de données : par exemple par production de documents XML à partir de formulaires, notamment HTML, présentés à l'utilisateur final dans son navigateur Web comme le montre la figure 2.

Les différentes sources 11, 12, 13 ont accès à une interface, respectivement 21i, 22i et 23i, permettant la récupération des données. Les sources 11, 12, 13 peuvent avoir accès soit à une interface unique 20i, soit chacun à sa propre interface 21i, 22i et 23i comme illustrée par la figure 2, soit à une interface propre pour certaines sources et une interface communes pour d'autres.

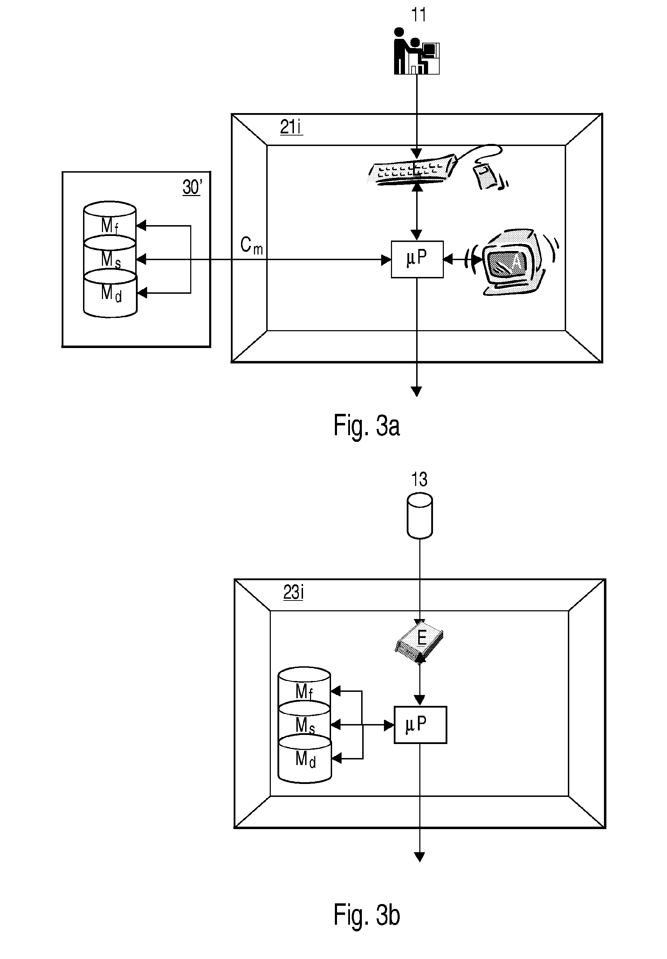

Les figures 3a et 3b montre deux exemples d'interface 20i, 21i, 22i, 23i. Les interfaces 20i, 21i, 22i et 23i peuvent comporter un dispositif d'introduction E. Ce dispositif d'introduction E permet aux données soit d'être introduite par un utilisateur 11 ou 12, soit reçues d'un dispositif source 13.
Ainsi, le dispositif d'introduction E pour l'utilisateur 11 peut être, par exemple, un clavier, une souris, un écran tactile, un dispositif de reconnaissance vocale... comme le montre la figure 3a. Le dispositif d'introduction E pour le dispositif source 13 peut, quant à lui, être un modem pour une liaison câblée, un récepteur pour liaison radio, satellite, infrarouge... comme le montre la figure 3b.

Les interfaces 20i, 21i, 22i et 23i peuvent être reliées par la sortie Cₘ à des moyens de mémorisation M - Figure 3a - ou comporter-Figure 3b - ces moyens de mémorisation M. Dans les moyens de mémorisation M peuvent être stockés, notamment, M_{d} : plusieurs droits d'utilisation, Mₛ : un ou plusieurs utilisateurs et/ou dispositif source et les droits d'utilisation associés, M_{f} : plusieurs formulaires d'introduction des données 20i(1 ) et 20i(2), et les droits d'utilisation associés.

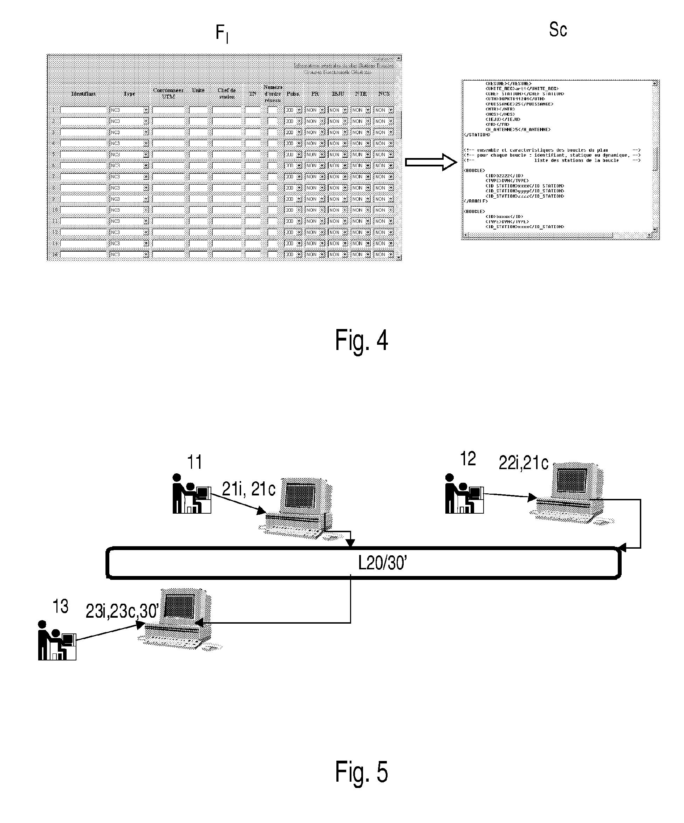

Dans le cas d'une interface 21 i homme machine telle que celle présentée par la figure 3a, l'interface 21i peut comporter un dispositif d'affichage A. Ce dispositif d'affichage A permet de guider l'utilisateur 11 pour entrer les données via le dispositif d'introduction E. Il peut s'agir d'un moniteur sur lequel sera visualisé l'un des formulaires d'introduction de données F_{I} (voir figure 4) stockés dans les moyens de mémorisation M.

En outre, les interfaces 20i, 21i, 22i et 23i peuvent comporter des moyens de contrôle µP des dispositifs d'affichage, d'introduction et des moyens de mémorisation générant, en fonction des droits d'utilisation associé à l'utilisateur ou au dispositif source opérant sur le système, le formulaire ayant les mêmes droits d'utilisation associés dans lequel les données sont récupérées.

Chaque interface 20i, 21i, 22i, 23i est relié à un convertisseur 20c, 21c, 22c, 23c. Le convertisseur 20c, 21c, 22c, 23c transcrit les données récupérées par l'interface 20i, 21i, 22i, 23i dans un langage d'interopérabilité, notamment XML, sous la forme d'un fichier élémentaire (comme celui présenté à la figure 4).

Les fichiers élémentaires ainsi produits sont transmis à des moyens d'édition 30'. Les moyens d'édition sont donc reliés à chacun des convertisseurs de données au moins ponctuellement voire de façon permanente soit par liaisons câblées (réseau Internet ou Intranet, téléphonique...), soit par liaisons radio (GSM, GPRS, UMTS...), soit par liaison satellite, soit par liaison infrarouge (notamment entre deux portables) etc. Les moyens d'édition produisent à partir de plusieurs fichiers élémentaires un fichier global dans un langage d'interopérabilité.

Ainsi, l'interface 20i, 21i, 22i, 23i et le convertisseur associés 20c, 21 c, 22c, 23c peuvent être soit co-localisés, soit délocalisés. De plus, les moyens d'édition 30' d'un fichier global peuvent être délocalisés par rapport aux interfaces 20i, 21i, 22i, 23i et aux convertisseurs 20c, 21c, 22c, 23c. L'interface 21i, 22i ou le l'ensemble interface-convertisseur 21 i-21c, 22i-22c et les moyens d'édition 30' peuvent être portables assurant ainsi la mobilité de l'utilisateur 11, 12.

Une sortie du système de gestion de données permet la transmission du fichier global ainsi obtenue à un système externe. De la même façon la liaison vers le système externe auquel est destiné le fichier global peut être ponctuelle ou permanente. Il peut s 'agir d'une liaison câblée ou par ondes (radio, infrarouge, satellite...).

Le système de gestion de données peut aussi comporter une entrée connectée aux moyens d'édition 30' d'un fichier global et destinée à être relié à un dispositif source élaboré 14 (non représenté), le dispositif source élaboré transmettant au moins un fichier élémentaire dans un langage d'interopérabilité aux moyens d'édition 30' d'un fichier global via cette entrée.

L'architecture du système de gestion de données peut être déclinée selon au moins les deux variantes suivantes:

La première variante utilise HTML comme format pivot pour l'affichage et la persistance des informations. Il s'agit de la plus simple des deux variantes présentées. Elle ne nécessite pas d'analyseur XML et des développements associés. Malgré la distribution autour d'un réseau sur clients légers, cette architecture doit être classée dans la catégorie « 1-TIER ». Le processus associé au développement d'une telle application est de type RAD (Rapid Application Development en anglais, c'est à dire une application dont le développement est rapide, dans le sens communément associé de « Quick & Dirty »).

Cette solution reste viable pour un nombre limité d'utilisateurs, avec un modèle de données relativement simple. Des outils du monde XML (feuilles de style XSL et transformers XSLT) permettent d'assurer et d'automatiser les évolutions du système de production XML. Cette variante est particulièrement adaptée au maquettage du système de gestion de données à réaliser.

La seconde variante utilise HTML comme format de présentation et XML comme format de persistance des informations. Ce découplage, assuré par un analyseur XML, permet de classer l'architecture dans la catégorie « 2-TIERS ». La mise en oeuvre de cette solution reste simple ; L'analyse XML représente le surcoût par rapport à la première variante. Cette variante permet de développer des applications complètes, évolutives et pérennes, et ce, en associant l'efficacité à court terme d'un processus de type RAD et les critères de qualité indispensables aux applications du monde des services et de l'industrie.

Un exemple de mise en oeuvre du système de gestion de données est schématisée sur la Figure 5. Il s'agit d'un cas avec trois utilisateurs 11, 12, 13 sur trois postes de travail (postes clients). Chacun des trois postes comprennent une interface 21i, 22i, 23i et un convertisseur 21c, 22c, 23c. Un des postes héberge les moyens d'édition 30', par exemple sous la forme d'un logiciel d'édition coopérative conçu selon les principes de l'architecture (ce poste client peut aussi être un poste serveur). Il s'agit d'une utilisation préférentielle du principe. D'autres cas de mise en oeuvre sont possibles : restriction à un seul poste (utilisateur unique, à la fois client et serveur), poste serveur dédié (pas d'utilisateur associé au poste serveur qui ne fait qu'héberger le logiciel d'édition). Le cas restreint à un seul poste permet la mise en oeuvre du principe et de l'architecture associée aux applications « stand-alone ».

Ci-après sont énoncées un exemple de caractéristiques de déploiement du système de gestion de données :

Sur les postes clients : seule la présence des moyens de mémorisation et des moyens de contrôle de l'interface 21 i, 22i, 23i sont requis. Notamment, lorsque l'interface comporte l'utilisation d'un formulaire sous le format HTML, ces moyens peuvent comprendre un navigateur (par exemple Netscape ou Microsoft Explorer). L'utilisateur se connecte à l'URL du serveur HTTP hébergeant le convertisseur 21c, 22c, 23c, par exemple un logiciel d'édition XML.

Sur le poste serveur : les moyens d'édition 30' d'un fichier global (par exemple un logiciel d'édition coopérative) sont installés. Les moyens d'édition 30' comporte :
- Des moyens de communications par l'intermédiaire de la liaison L20/30' avec les interfaces 21i, 22i, 23i et convertisseurs 21c, 221c, 23c (par exemple par une partie middleware comportant l'installation d'un serveur HTTP comprenant les servlets JAVA - notamment, un serveur APACHE ou un serveur léger TOMCAT).
- Des moyens de mémorisation M permettant, notamment la présentation aux sources 11, 12, 13. Lorsque les formulaires F_{I} et F_{B} utilisés sont HTML : L'installation des fichiers HTML de l'application (par exemple, la page de présentation F_{B}, l'aide en ligne, les formulaires F_{I} de représentation des documents XML à produire). Des applets de contrôle et/ou de présentation peuvent être associées aux fichiers HTML.
- Des moyens de contrôle : par exemple sous la forme d'une partie application serveur : L'installation des classes JAVA de l'application (classes servlets, classes analyseur et classes analyse XML pour la seconde variante, classes de persistance)

Pour simplifier le texte de la présentation du principe, par la suite le terme d'application JAVA est employé pour désigner la partie serveur dans son ensemble.

Le document XML complet à produire est structuré en sous-ensembles. Chaque sous-ensemble est affecté à une source 11, 12, 13 chargée d'élaborer le sous-document XML correspondant à chaque sous-ensemble. Un formulaire HTML F_{I}, correspondant à chaque sous-ensemble, est créé. Ce formulaire F_{I} est la représentation dans le navigateur de la source 11, 12, 13 de la partie de document XML que cette source 1,1, 12, 13 doit produire. Chaque formulaire F_{I} fait partie des moyens d'édition 30', dans notre exemple du logiciel d'édition installé sur le serveur.

Chaque formulaire F_{I}, une fois renseigné par la source 11, 12, 13, est stocké dans les moyens de mémorisation M des moyens d'édition 30' (sauvegarde sous forme d'un fichier sur le serveur, par exemple) et permettant sa ré-édition par la source 11, 12, 13. La sauvegarde est assurée par l'application JAVA.

Dans la première variante : HTML est le format pivot de l'architecture. Le fichier est au format HTML brut (le formulaire renseigné est sauvegardé). La ré-édition par la source 11, 12, 13 est assurée par un hyperlien sur le fichier HTML sauvegardé. Dans la seconde variante : Le fichier est au format XML. Les données du formulaire HTML reçues par l'application JAVA sont converties en XML. La ré-édition par la source est assurée par l'analyseur XML de l'application JAVA : le formulaire est généré, ses données sont extraites du fichier XML.

La production du XML est réalisée par le convertisseur 21 c, 22c, 23c, par exemple par génération du texte XML dans le navigateur (format « text/plain ») à partir des informations du formulaire renseigné. La génération est assurée par l'application JAVA. Le texte XML est alors disponible sur le poste de la source 11, 12, 13 qui peut l'enregistrer localement et ainsi le transférer. Cette méthode permet que le système produise des fichiers sur le poste client, ce qui est normalement impossible depuis une application lancée dans un navigateur (mode de fonctionnement en « sand-box »).

La production du document XML complet est réalisée : Par le choix de la source 13 (dite administrateur ) des sous-ensembles à fusionner. Ce choix peut-être fourni à la source - administrateur 13 par un formulaire listant pour chaque source 11, 12, 13 les sous-documents disponibles et lui permettant d'en sélectionner un ou plusieurs pour chaque source 11, 12, 13. Ce sont ces sélections qui sont fusionnées.

Dans le cas de la première variante, il y a présentation préalable à la source - administrateur des informations cumulées :
- Par la création d'un formulaire global F_{G} constitué de la réunion des formulaires correspondant à chaque sous-ensemble. Cette fusion se base sur des marquages réalisés lors de la sauvegarde de chaque formulaire par l'application JAVA, permettant d'ajuster et de générer le formulaire résultat (pour introduire une entête spécifique en particulier).
- Par la génération du texte XML dans le navigateur à partir des informations du formulaire global renseigné (de la même façon que pour un formulaire élémentaire).

Dans le cas de la seconde variante, la présentation préalable à l'utilisateur des informations cumulées n'est pas nécessaire. La production XML complète est directe : par la génération du texte XML dans le navigateur à partir de la fusion de chaque fichier élémentaire XML sauvegardé (pas d'analyse XML).

Pour la première variante, HTML est utilisé comme format pivot de la production XML : il s'agit d'une fusion affichage/persistance procurant la simplicité et la légèreté du procédé de gestion des données. Il n'est pas nécessaire de recourir aux service d'un système de gestion de base de données et d'une base de données associée, ou d'un analyseur XML pour reconstituer le formulaire de représentation des informations.

Pour la seconde variante, la production XML repose sur un format XML natif, et HTML est restreint à l'affichage dans le navigateur. Cette solution présente l'avantage de la séparation entre le fond (XML) et la forme (HTML) et d'être plus robuste aux variations de la présentation dans le navigateur.

Les principales étapes du procédé de gestion de données sont:
- Plusieurs étapes de récupération de données, un sous-ensemble de données étant récupéré à chaque étape de récupération,
- Une étape de conversion du sous-ensemble de données récupérées dans un langage d'interopérabilité sous la forme d'un fichier élémentaire, une étape de conversion étant effectuée après chaque étape de récupération ,
- Une étape d'édition d'un fichier global dans un langage d'interopérabilité à partir de plusieurs fichiers élémentaires, le fichier global étant destinée à un système externe capable de traiter tous les ensembles de données récupérées transmis dans le fichier global.

Les données sont introduites par une source qui est un utilisateur ou sont transmises par un dispositif source. Cette introduction ou transmission des données fait partie de l'étape de récupération des données. Les données peuvent être récupérées dans un formulaire prédéterminée F_{I} en fonction du type de données à récupérer. Dans ce cas, lorsque les données sont transmises par un dispositif source, les données transmises ont été formatées selon le formulaire de récupération avant leur transmission.

Le fichier élémentaire peut être une sous-suite de commandes, et le fichier global une suite de commande, ces commandes étant destinées aux paramétrages et/ou aux contrôle de dispositifs électroniques externes. Le langage d'interopérabilité utilisé peut être le langage XML ou l'une de ses variantes, ou associé au langage Java.

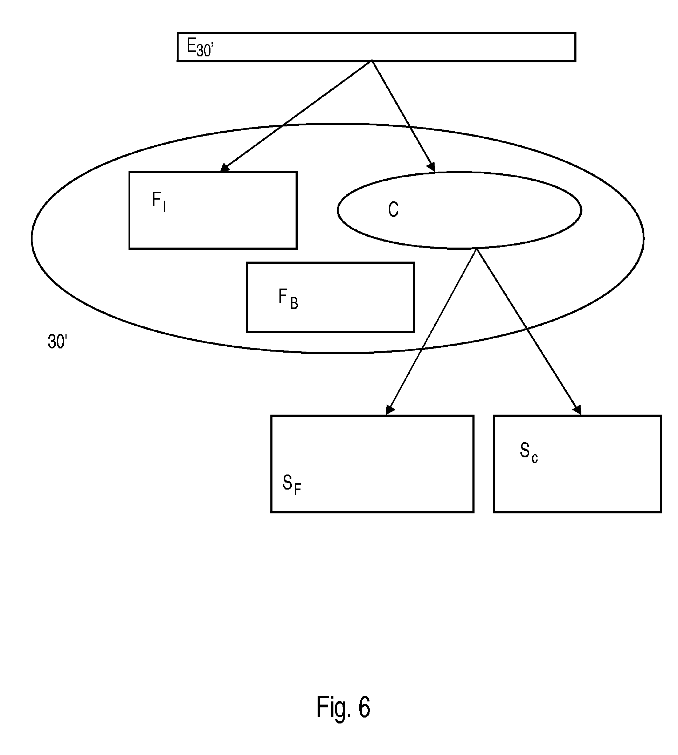

Les caractéristiques des moyens d'édition 30' lorsqu'il comporte un logiciel d'édition coopérative à base de servlets sont schématisés avec sont environnement sur la figure 6. La structure des documents XML à produire (DTD - pour Document Type Definition soit définition de document type - ou schéma) est fournie aux moyens d'édition 30'. A partir de cette structure sont définis les formulaires, par exemple HTML, de représentation FI et les moyens de contrôle C, notamment sous forme d'application JAVA (servlets, parser XML, classes de persistance), comportant le convertisseur 21c, 22c, 23c. Les moyens d'édition comporte aussi des formulaires d'accueil, d'aide Applets JAVA et javascript F_{B} peremettant par exemple d'identifier la source 11, 12 ou 13. L'application JAVA C permet la sauvegarde des fichiers HTML ou XML S_{F} correspondant aux formulaires F_{I} renseignés, et aussi la conversion du formulaire F_{I} renseigné en fichier XML S_{c}.

Les principales fonctions du procédé de gestion des données mis en oeuvre dans cet exemple, sont les suivantes :
a) Récupération des données dans les champs d'un formulaire élémentaire F_{I} au niveau de l'interface 21 i, 22i, 23i.
b) Conversion du formulaire élémentaire F_{I} renseigné en un fichier S_{c} (HTML pour la première variante et XML pour la seconde variante) par le convertisseur 21c, 22c, 23c et sauvegarde de ce fichier (soit au niveau du convertisseur 21c, 22c, 23c, soit au niveau des moyens d'édition 30').
c) Génération d'un fichier HTML correspondant à la liste des formulaires élémentaires déjà renseignés par l'utilisateur (fichier de liens pour la première variante, et liste de formulaire pour la seconde) par les moyens d'édition 30'.
d) Génération et envoi au navigateur du texte XML correspondant au formulaire élémentaire renseigné.
e) Récupération du choix source - administrateur par une interface 21 i, 22i, 23i des éléments S_{c} à fusionner et génération :
   - pour la première variante, d'un fichier HTML correspondant à la réunion de formulaires élémentaires renseignés. Les fonctions 1 et 4 sont alors applicables au formulaire global.
   - pour la seconde variante, du résultat XML complet par les moyens d'édition 30'.

La présente invention définit donc un procédé et un système de gestion de données permettant l'édition des données dans un langage d'interopérabilité. L'un des exemple illustrant l'invention consiste en une méthode et une architecture de logiciel pour la conception, le développement et la mise en oeuvre d'un système simple et léger de production et d'édition de documents au format XML en environnement coopératif et distribué.

Cette architecture de logiciel de production de documents XML dispose des caractéristiques suivantes :
- Architecture légère (effort de développement et de mise en oeuvre simplifiés)
- Architecture coopérative permettant l'élaboration concurrente de parties de documents XML et sa fusion en documents résultats. Le format XML résultat est disponible en direct pour chaque coopérant.
- Architecture distribuée autour d'un réseau intranet, multi-plateformes
- Architecture ouverte aux documents XML générés par des systèmes externes

L'invention concerne aussi une chaîne de traitement de données comportant le système de gestion de données décrit et un système externe comportant un dispositif d'analyse capable de traiter tous les ensembles de données récupérées transmis dans le fichier global. Le dispositif d'analyse peut être capable de générer un fichier dans un langage dit d'interopérabilité comportant des commandes de dispositifs finaux correspondant aux commandes et/ou paramètres des fichiers élémentaires modifiés ou non en fonction des autres données contenues dans le fichier global.

## Revendications

1. Procédé de gestion de données **caractérisé en ce qu'**il comporte :
- Plusieurs étapes de récupération de données, un sous-ensemble de données étant récupéré à chaque étape de récupération,
- Une étape de conversion du sous-ensemble de données récupérées dans un langage d'interopérabilité sous la forme d'un fichier élémentaire, une étape de conversion étant effectuée après chaque étape de récupération ,
- Une étape d'édition d'un fichier global dans un langage d'interopérabilité à partir de plusieurs fichiers élémentaires, le fichier global étant destinée à un système externe capable de traiter tous les ensembles de données récupérées transmis dans le fichier global.

2. Procédé de gestion de données selon la revendication précédente **caractérisé en ce que** le fichier élémentaire est une sous-suite de commandes, et le fichier global une suite de commande, ces commandes étant destinées aux paramétrages et/ou aux contrôle de dispositifs électroniques externes.

3. Procédé de gestion de données selon l'une quelconque des revendications précédentes **caractérisé en ce que** l'étape de récupération des données comporte l'introduction des données par un utilisateur ou la transmission des données par un dispositif source.

4. Procédé de gestion de données selon l'une quelconque des revendications précédentes **caractérisé en ce que**, lors de l'étape de récupération des données, les données sont récupérées dans un formulaire prédéterminée en fonction du type de données à récupérer.

5. Procédé de gestion de données selon les revendications 3 et 4 **caractérisé en ce que** l'étape de récupération comporte le formatage par le dispositif source des données selon le formulaire de récupération avant leur transmission.

6. Procédé de gestion de données selon l'une quelconque des revendications précédentes **caractérisé en ce que** le langage d'interopérabilité est le langage XML ou l'une de ses variantes, ou associé au langage Java.

7. Système de gestion de données **caractérisé en ce qu'**il comporte :
- Au moins une interface permettant la récupération de données,
- Au moins un convertisseur des données récupérées dans un langage d'interopérabilité sous la forme d'un fichier élémentaire, un convertisseur étant relié à chaque interface,
- Des moyens d'édition d'un fichier global dans un langage d'interopérabilité à partir de plusieurs fichiers élémentaires, les moyens d'édition étant reliés à chacun des convertisseurs de données au moins ponctuellement,
- Une sortie destinée à être reliée à un système externe auquel sera transmis le fichier global.

8. Système de gestion de données selon la revendication précédente **caractérisé en ce qu'**il met en oeuvre le procédé de gestion de données selon l'une quelconque des revendications 1 à 6.

9. Système de gestion de données selon l'une quelconque des revendications 7 ou 8 **caractérisé en ce qu'**il comporte des moyens de mémorisation dans lesquels sont stockés plusieurs droits d'utilisation, un ou plusieurs utilisateurs et/ou dispositif source et les droits d'utilisation associés, plusieurs formulaires d'introduction des données et les droits d'utilisation associés.

10. Système de gestion de données selon la revendication précédente **caractérisé en ce que** soit l'interface, soit les moyens d'édition comportent les moyens de mémorisation.

11. Système de gestion de données selon l'une quelconque des revendications 7 à 10 **caractérisé en ce que** l'interface comporte :
- un dispositif d'introduction permettant aux données d'être introduite par un utilisateur ou transmises par un dispositif source,
- et/ou un dispositif d'affichage,
- des moyens de contrôle des dispositifs d'affichage, d'introduction et des moyens de mémorisation affichant, en fonction des droits d'utilisation associé à l'utilisateur ou au dispositif source opérant sur le système, le formulaire ayant les mêmes droits d'utilisation associés dans lequel les données sont récupérées.

12. Système de gestion de données selon l'une quelconque des revendications 7 à 10 **caractérisé en ce que** :
- l'interface et le convertisseur sont co-localisés et/ou portables, et/ou
- les moyens d'édition d'un fichier global sont délocalisés par rapport aux interfaces et aux convertisseurs et/ou portables.

13. Système de gestion de données selon l'une quelconque des revendications 7 à 11 **caractérisé en ce qu'**il comporte au moins une entrée connectée aux moyens d'édition d'un fichier global et destinée à être relié à un dispositif source élaboré, le dispositif source élaboré transmettant au moins un fichier élémentaire dans un langage d'interopérabilité aux moyens d'édition d'un fichier global via cette entrée.

14. Chaîne de traitement de données comportant le système de gestion de données selon l'une quelconque des revendications 7 à 11 **caractérisé en ce qu'**elle comporte un système externe comportant un dispositif d'analyse capable de traiter tous les ensembles de données récupérées transmis dans le fichier global.

15. Chaîne de traitement de données selon la revendication précédente **caractérisé en ce que** le dispositif d'analyse est capable de générer un fichier dans un langage dit d'interopérabilité comportant des commandes de dispositifs finaux correspondant aux commandes et/ou paramètres des fichiers élémentaires modifiés ou non en fonction des autres données contenues dans le fichier global.
